# EUROPÄISCHE PATENTSCHRIFT

(11) **EP 3 741 087 B1**
(45) Veröffentlichungstag und Bekanntmachung des Hinweises auf die Patenterteilung: **15.10.2025**
(21) Anmeldenummer: 19700701.6
(22) Anmeldetag: 14.01.2019
(51) Int. Cl.: H04L 12/40, G06F 11/07, H04L 43/0811, H04L 43/0817, H04L 43/10

(54) **VERFAHREN UND COMPUTERPROGRAMME FÜR EINE ÜBERWACHUNGSINSTANZ**
METHOD AND COMPUTER PROGRAMS FOR A MONITORING ENTITY
PROCÉDÉ ET PROGRAMMES INFORMATIQUES POUR UNE ENTITÉ DE SURVEILLANCE

(30) Priorität: 18.01.2018 DE 102018101103
(43) Veröffentlichungstag der Anmeldung: 25.11.2020
(73) Patentinhaber: VOLKSWAGEN AKTIENGESELLSCHAFT, 38440 Wolfsburg (DE)
(72) Erfinder: BLUMENTRITT, Marc, 38104 Braunschweig (DE)
(74) Vertreter: 2SPL Patentanwälte PartG mbB
(86) Internationale Anmeldenummer: PCT/EP2019/050834
(87) Internationale Veröffentlichungsnummer: WO 2019/141632

(56) Entgegenhaltungen:
- EP-A1- 2 144 400
- US-A1- 2004 100 971
- US-B1- 6 574 197
- SILVA L M ET AL: "DIP : Distributed Diagnosis Protocol", MICROPROCESSING AND MICROPROGRAMMING, ELSEVIER SCIENCE PUBLISHERS, BV., AMSTERDAM, NL, vol. 38, no. 1-5, 1 September 1993 (1993-09-01), pages 171 - 178, XP024233240, ISSN: 0165-6074, [retrieved on 19930901], DOI: 10.1016/0165-6074(93)90140-G

## Beschreibung

Die vorliegende Erfindung bezieht sich auf Verfahren und Computerprogramme für eine Überwachungsinstanz und eine Kommunikationskomponente, eine Überwachungsinstanz, eine Kommunikationskomponente, ein System und ein Fahrzeug, insbesondere aber nicht ausschließlich, auf ein Konzept zur Überwachung von Kommunikationskomponenten zur ereignisbasierten Kommunikation in einem Kraftfahrzeug.

In der Fahrzeugtechnik und auch in der Computer- oder Kommunikationstechnik allgemein kommen Datenbusse zum Einsatz, die eine Datenkommunikation zwischen verschiedenen Komponenten, die an einen Datenbus angeschlossen oder angekoppelt sind, erlauben. Dabei tauschen beispielsweise zwei Kommunikationspartner oder Kommunikationskomponenten Botschaften über einen Datenbus aus, wobei die Kommunikation ereignisbasiert (auch engl. "Event"-basiert) ist. Im Gegensatz zu zyklischer Kommunikation werden bei Event-basierter Kommunikation nur Botschaften ausgetauscht, wenn ein dazugehöriges Ereignis (Event) auftritt. Z.B. wird an einem Kraftfahrzeugbus eine "Blinker Einschalten"-Botschaft (auch engl. "Request" iSv. Anfrage) verschickt, wenn der Fahrer den Blinker betätigt und entsprechend eine "Blinker Ausschalten" Botschaft, wenn der Blinkerhebel wieder in die Ausgangsposition zurückkehrt.

Durch Störungen kann es dazu kommen, dass entweder Kommunikationspartner oder die Kommunikationsstrecke (z.B. Unterbrechung Datenbus) ausfällt. In diesem Fall kann sich die Frage stellen, wie ein solcher Ausfall detektiert werden kann. Bei Event-basierter Kommunikation gibt es keine Time-Out Überwachung, so dass dieser Ausfall ohne weitere Maßnahme nicht auffällt. Aus Sicht eines Kommunikationspartners ist kein Unterschied zwischen einem Ausfall oder einem Nicht-Auftreten des Ereignisses detektierbar, da in beiden Fällen keine Botschaft verschickt wird.

Für eine kontinuierliche Soll-Vorgabe würde ein dienstanforderndes Gerät (auch engl. "Client") seinen Request erneuern, bevor eine maximale Ausführungsdauer abläuft. Am oben aufgeführten Beispiel würde der Blinker nach Empfang der Einschalten-Botschaft beispielsweise für 10 Sekunden eingeschaltet. Wäre der Blinkerhebel nach diesen 10 Sekunden jedoch immer noch aktiviert, so müsste eine neue Einschalten-Botschaft geschickt werden, um den Blinker aktiv zu halten. Sollte der Blinkerhebel vor Ablauf der 10 Sekunden deaktiviert werden, so müsste entsprechend eine Ausschalten-Botschaft geschickt werden. Dieser Mechanismus würde zwar verhindern, dass der Blinker endlos aktiviert bleibt falls es Kommunikationsfehler auf dem Datenbus gäbe, jedoch würde eine Detektion des Fehlers an sich ausbleiben.

Bei sicherheitsrelevanten Funktionen sind die Time-Out Zeiten typischerweise kleiner als eine Sekunde. Um dies zu berücksichtigen würde die oben beschriebene Event-basierte Kommunikation zu einer quasi zyklischen Kommunikation gewandelt werden, um die Time-Outs einhalten zu können. Da dies im Zweifel sehr viele Funktionen betrifft, würde eine hohe Buslast resultieren, ohne einen funktionalen Mehrwert zu erhalten. Beispiele für solche sogenannten Use-Cases (Anwendungsfälle) sind Blinker, Warnlampen, Sitzverstellung, Beleuchtung, Lüftung, Sollwertvorgaben (z.B. Geschwindigkeitsregelung), Lüftersteuerungen, etc.

Die Druckschrift US 6,574,197 B1 offenbart eine Netzwerküberwachungsvorrichtung, die in einem mit einem Netzwerk verbundenen Knoten angeordnet ist. Eine Bestimmungseinheit ist zum Senden eines Überwachungspakets an einen benachbarten Knoten stromaufwärts oder stromabwärts ausgebildet. Es wird bestimmt, dass der benachbarte Knoten vom Netzwerk abgekoppelt ist, es sei denn, die Bestimmungseinheit empfängt ein entsprechendes Antwortpaket. Eine Benachrichtigungseinheit informiert gegebenenfalls die anderen Knoten im Netzwerk über einen abgekoppelten Knoten.

SILVA L.M. ET AL: "DIP : Distributed Diagnosis Protocol", MICROPROCESSING AND MICROPROGRAMMING, ELSEVIER SCIENCE PUBLISHERS, BV., AMSTERDAM, NL, Bd. 38, Nr. 1-5, 1. September 1993 (1993-09-01), Seiten 171-178, diskutiert ein Diagnoseprotokoll zur Überprüfung der Verfügbarkeit von Prozessoren in einem verteilten System. Jeder Knoten verwaltet eine Netzwerkstatustabelle und eine Fehlererkennung wird durch Nachrichten erreicht, die die Vitalität eines Knotens anzeigen. Der Signalisierungsaufwand dieser Nachrichten ist minimal und der Hauptvorteil des Protokolls ist die geringere Diagnoselatenz, wenn ein Fehler wird erkannt. Da die Nichtverfügbarkeit eines Knotens kann Ergebnis eines Prozessorabsturzes oder einer Netzwerkpartition sein.

Das Dokument US 2004/100971 A1 beschreibt ein Kommunikationssystem, in dem ein erster Knoten mit mehreren zweiten Knoten verbunden ist, um den Betrieb der zweiten Knoten zu steuern. Die mehreren zweiten Knoten sind in einer oder mehreren logischen Verbindungen angeordnet, wobei sich die Topologie der einen oder mehreren logischen Verbindungen von der Topologie der physischen Verbindung der Knoten unterscheidet. Jeder zweite Knoten umfasst dabei Mittel zum Senden von Statusnachrichten an seinen logischen Nachfolgeknoten und Mittel zum Überwachen von Statusnachrichten, die von seinem zweiten logischen Vorgängerknoten gesendet wurden, um dessen Status zu bestimmen.

Die Patentveröffentlichung EP 2144400 A1 offenbart ein verteiltes Ethernet-System, das aus einer Vielzahl von in Reihe geschalteten Switches besteht, die eine Ringstruktur bilden. Jeder der Switches führt nach der Takt-Synchronisierung periodisch eine Ringdetektion und eine Protokollmaschinendetektion gemäß einer vordefinierten Softwarekonfiguration nacheinander durch und sendet eine Fehlermeldung, wenn ein Ringverbindungsfehler oder ein Protokollmaschinenfehler festgestellt wird.

Es besteht daher ein Bedarf an einem verbesserten Konzept zur Erkennung der oben genannten Fehlerbilder, ohne dass alle Funktionen auf Applikationsebene eigene Time-Out-Überwachungsmechanismen zu implementieren brauchen.

Diesen Bedarf werden Verfahren und Computerprogramme für eine Überwachungsinstanz und eine Kommunikationskomponente, eine Überwachungsinstanz, eine Kommunikationskomponente, ein System und ein Fahrzeug gemäß den anhängigen unabhängigen Ansprüchen gerecht. Vorteilhafte Ausgestaltungen und Weiterbildungen sind Gegenstand der abhängigen Ansprüche.

Ausführungsbeispiele der vorliegenden Erfindung basieren auf dem Kerngedanken, dass Überwachungsinstanzen zur Funktionskontrolle von Kommunikationskomponenten genutzt werden können. Dabei können die Überwachungsinstanzen untereinander zyklisch kommunizieren und so ein Ausfall einer Kommunikationskomponenten oder eines Datenbusses erkannt werden. Die zwischen verschiedenen Überwachungsinstanzen ausgetauschte zyklische Kontrollinformation kann gegenüber der Kontrollinformation, die zwischen den Kommunikationskomponenten direkt zur Überwachung ausgetauscht werden müsste, reduziert werden, insbesondere wenn eine Überwachungsinstanz mehrere Kommunikationskomponenten überwacht.

Ausführungsbeispiele schaffen ein Verfahren für eine Überwachungsinstanz zur Überwachung zumindest einer Kommunikationskomponente, wobei die Kommunikationskomponente ausgebildet ist, um ereignisbasiert über einen Datenbus mit ein oder mehreren anderen Kommunikationskomponenten zu kommunizieren. Das Verfahren umfasst ein regelmäßiges Überprüfen der Funktion der Kommunikationskomponente durch die Überwachungsinstanz, und ein zyklisches Kommunizieren mit zumindest einer anderen Überwachungsinstanz, die einer anderen Kommunikationskomponente zugeordnet ist, um die Funktion der Kommunikationskomponente, die Funktion der anderen Kommunikationskomponente und die Funktion des Datenbusses zu überwachen. Die zyklische Kommunikation der Überwachungsinstanzen untereinander erlaubt die Überwachung der Kommunikation zwischen den Kommunikationskomponenten und des Datenbusses.

Ausführungsbeispiele schaffen ein Verfahren für eine Kommunikationskomponente zur Kommunikation mit ein oder mehreren anderen Kommunikationskomponenten über einen Datenbus. Das Verfahren umfasst ein ereignisbasiertes Kommunizieren mit den ein oder mehreren anderen Kommunikationskomponenten über den Datenbus und ein zyklisches Kommunizieren mit der Überwachungsinstanz. Ausführungsbeispiele können so eine effiziente Überwachung von Kommunikationskomponenten erlauben.

In manchen Ausführungsbeispielen erfolgt das zyklische Kommunizieren zwischen Überwachungsinstanzen auf dem Datenbus, wodurch der Datenbus indirekt mit überprüft werden kann. Ein Ausfall der zyklischen Kommunikation bei intakten Überwachungsinstanzen erlaubt den Schluss auf eine Fehlfunktion auf dem Datenbus. In weiteren Ausführungsbeispielen kann das Verfahren ferner ein zyklisches Kommunizieren zwischen der Überwachungsinstanz und der Kommunikationskomponente über eine sich von dem Datenbus unterscheidende Verbindung, beispielsweise eine lokale Verbindung, umfassen. Die zur direkten Überwachung eingerichtete Kommunikation ist dann unabhängig vom Datenbus und deren Erfolg hängt nicht an den Übertragungskapazitäten und Zuständen des Datenbusses.

In manchen Ausführungsbeispielen kann das Verfahren ferner ein Übermitteln einer Fehlerindikation an zumindest eine andere Überwachungsinstanz umfassen, wenn eine Fehlfunktion oder ein Kommunikationsfehler der Kommunikationskomponente detektiert wird. Insofern kann die zur Überwachung notwendige Kommunikation auf die Überwachungsinstanzen beschränkt werden und so effizient implementiert werden. Das Verfahren umfasst darüber hinaus ein Synchronisieren mit zumindest einer anderen Überwachungsinstanz über den Datenbus umfassen. Dadurch können eine Effizienz der zyklischen Kommunikation verbessert werden. In manchen Ausführungsbeispielen kann ein Registrieren der Kommunikationskomponente bei der Überwachungsinstanz erfolgen. Analog kann das Verfahren für die Kommunikationskomponente ein Registrieren bei der Überwachungsinstanz umfassen. Dadurch können die Überwachungsinstanz und das Verfahren universeller eingesetzt werden, beispielsweise für verschiedene und mehrere Kommunikationskomponenten. Ausführungsbeispiele können beispielsweise zur Überwachung von Kommunikationskomponenten und einem Datenbus in einem Fahrzeug eingesetzt werden.

Ausführungsbeispiele schaffen darüber hinaus ein oder mehrere Computerprogramme zur Durchführung eines oder mehrerer der hierin beschriebenen Verfahren, wenn das Computerprogramm auf einem Computer, einem Prozessor, oder einer programmierbaren Hardwarekomponente abläuft.

Ein weiteres Ausführungsbeispiel ist eine Überwachungsinstanz für eine Kommunikationskomponente, die zur Kommunikation mit ein oder mehreren anderen Kommunikationskomponenten über einen Datenbus ausgebildet ist. Die Überwachungsinstanz umfasst ein oder mehrere Schnittstellen zur Kommunikation über den Datenbus und zur Kommunikation mit der Kommunikationskomponente. Die Überwachungsinstanz umfasst ferner eine Kontrolleinrichtung, die ausgebildet ist, um die ein oder mehreren Schnittstellen zu kontrollieren, und um mit der Kommunikationskomponente und mit zumindest einer anderen Überwachungsinstanz einer anderen Kommunikationskomponente zyklisch zu kommunizieren. In manchen Ausführungsbeispielen kann die Kontrolleinrichtung ausgebildet sein, um mit der Kommunikationskomponente über eine sich von dem Datenbus unterscheidende Verbindung zu kommunizieren. Die Überwachung kann somit von dem Datenbus losgelöst erfolgen.

Die Kontrolleinrichtung kann ausgebildet sein, um eine Fehlerindikation an zumindest eine andere Überwachungsinstanz zu übermitteln, wenn eine Fehlfunktion oder ein Kommunikationsfehler der Kommunikationskomponente detektiert wird. Fehlfunktionen können so anderen Überwachungsinstanzen zur Kenntnis gebracht werden. Die Kontrolleinrichtung ist ausgebildet, um sich über den Datenbus mit zumindest einer anderen Überwachungsinstanz zu synchronisieren, und/oder kann in manchen Ausführungsbeispielen ausgebildet sein, um eine Registrierung einer Kommunikationskomponente durchzuführen. Die Überwachungsinstanz kann zur Überwachung von Kommunikationskomponenten und einem Datenbus in einem Fahrzeug ausgebildet sein.

Ausführungsbeispiele schaffen auch eine Kommunikationskomponente zur Kommunikation mit ein oder mehreren anderen Kommunikationskomponenten über einen Datenbus. Die Kommunikationskomponente umfasst ein oder mehreren Schnittstellen zur Kommunikation über den Datenbus und zur Kommunikation mit einer Überwachungsinstanz. Die Kommunikationskomponente umfasst darüber hinaus eine Kontrolleinrichtung, die ausgebildet ist, um die ein oder mehrere Schnittstellen zu kontrollieren, um mit den ein oder mehreren anderen Kommunikationskomponenten ereignisbasiert zu kommunizieren und um mit der Überwachungsinstanz zyklisch zu kommunizieren. Analog zu obiger Beschreibung kann die Kontrolleinrichtung ausgebildet sein, um bei der Überwachungsinstanz eine Registrierung durchzuführen.

Ausführungsbeispiele stellen auch ein System mit zumindest zwei Überwachungsinstanzen gemäß obiger Beschreibung und zumindest zwei den Überwachungsinstanzen zugeordneten Kommunikationskomponenten gemäß obiger Beschreibung bereit. Ein weiteres Ausführungsbeispiel ist ein Fahrzeug mit einem solchen System.

Weitere vorteilhafte Ausgestaltungen werden nachfolgend anhand der in den Zeichnungen dargestellten Ausführungsbeispiele, auf welche Ausführungsbeispiele generell jedoch nicht insgesamt beschränkt sind, näher beschrieben. Es zeigen:
Fig. 1 ein Flussdiagramm eines Ausführungsbeispiels eines Verfahrens für eine Überwachungsinstanz;
Fig. 2 ein Flussdiagramm eines Ausführungsbeispiels eines Verfahrens für eine Kommunikationskomponente;
Fig. 3 ein Ausführungsbeispiel einer Überwachungsinstanz, ein Ausführungsbeispiel einer Kommunikationskomponente und ein Ausführungsbeispiel eines Systems;
Fig. 4 eine Architektur eines Überwachungsdienstes in einem Ausführungsbeispiel;
Fig. 5 einen Ausfall einer Kommunikationskomponente in einem Ausführungsbeispiel;
Fig. 6 einen Ausfall eines Datenbusses in einem Ausführungsbeispiel;
Fig. 7 eine Sequenz von ausgetauschten Nachrichten in einem Ausführungsbeispiel;
Fig. 8 eine Sequenz von ausgetauschten Nachrichten in einem weiteren Ausführungsbeispiel; und
Fig. 9 eine Sequenz von ausgetauschten Nachrichten in einem weiteren Ausführungsbeispiel.

Verschiedene Ausführungsbeispiele werden nun ausführlicher unter Bezugnahme auf die beiliegenden Zeichnungen beschrieben, in denen einige Ausführungsbeispiele dargestellt sind. Optionale Merkmale oder Komponenten sind dabei in gestrichelten Linien dargestellt.

Obwohl Ausführungsbeispiele auf verschiedene Weise modifiziert und abgeändert werden können, sind Ausführungsbeispiele in den Figuren als Beispiele dargestellt und werden hierin ausführlich beschrieben. Es sei jedoch klargestellt, dass nicht beabsichtigt ist, Ausführungsbeispiele auf die jeweils offenbarten Formen zu beschränken, sondern dass Ausführungsbeispiele vielmehr sämtliche funktionale und/oder strukturelle Modifikationen, Äquivalente und Alternativen, die im Bereich der Erfindung liegen, abdecken sollen.

Man beachte, dass ein Element, das als mit einem anderen Element "verbunden" oder "verkoppelt" bezeichnet wird, mit dem anderen Element direkt verbunden oder verkoppelt sein kann oder dass dazwischenliegende Elemente vorhanden sein können. Wenn ein Element dagegen als "direkt verbunden" oder "direkt verkoppelt" mit einem anderen Element bezeichnet wird, sind keine dazwischenliegenden Elemente vorhanden. Andere Begriffe, die verwendet werden, um die Beziehung zwischen Elementen zu beschreiben, sollten auf ähnliche Weise interpretiert werden (z.B., "zwischen" gegenüber "direkt dazwischen", "angrenzend" gegenüber "direkt angrenzend" usw.).

Die Terminologie, die hierin verwendet wird, dient nur der Beschreibung bestimmter Ausführungsbeispiele und soll die Ausführungsbeispiele nicht beschränken. Wie hierin verwendet, sollen die Singularformen "einer", "eine", "eines" und "der", "die", "das" auch die Pluralformen beinhalten, solange der Kontext nicht eindeutig etwas anderes angibt. Ferner sei klargestellt, dass die Ausdrücke wie z.B. "beinhaltet", "beinhaltend", "aufweist", "umfasst", "umfassend" und/oder "aufweisend", wie hierin verwendet, das Vorhandensein von genannten Merkmalen, ganzen Zahlen, Schritten, Arbeitsabläufen, Elementen und/oder Komponenten angeben, aber das Vorhandensein oder die Hinzufügung von einem bzw. einer oder mehreren Merkmalen, ganzen Zahlen, Schritten, Arbeitsabläufen, Elementen, Komponenten und/oder Gruppen davon nicht ausschließen.

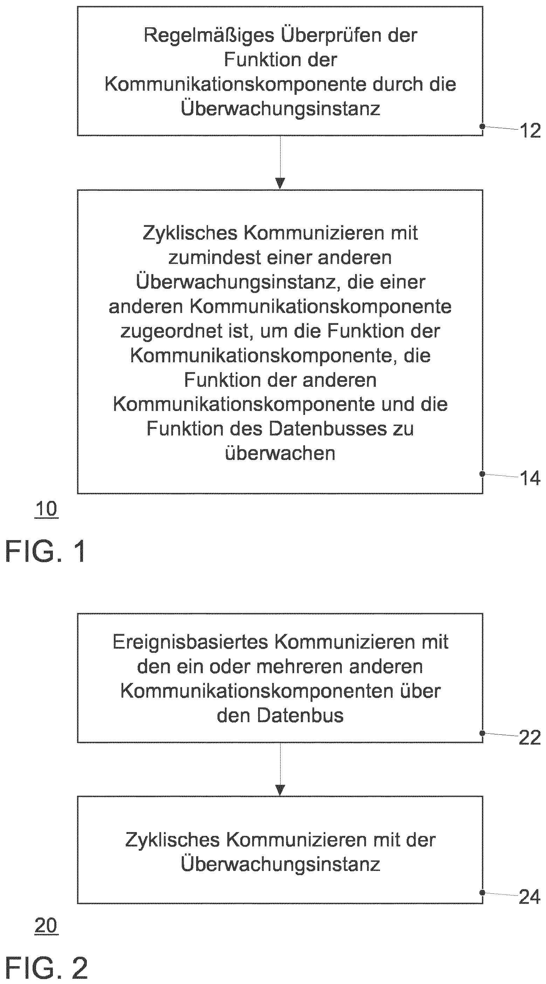

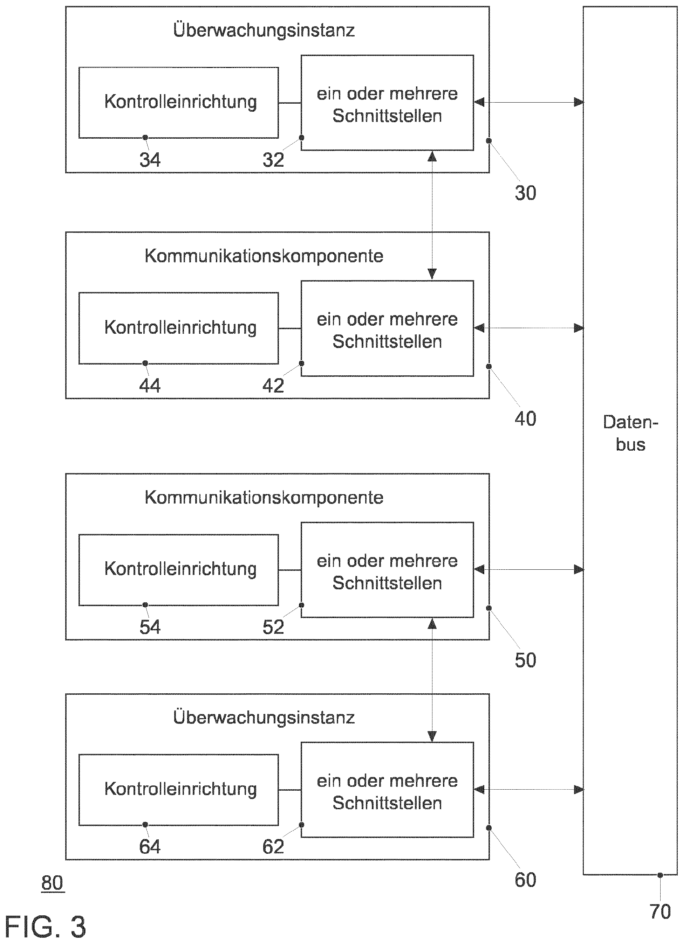

Fig. 1 illustriert ein Flussdiagramm eines Ausführungsbeispiels eines Verfahrens 10 für eine Überwachungsinstanz 30. Fig. 2 zeigt ein zugehöriges Flussdiagramm eines Ausführungsbeispiels eines Verfahrens 20 für eine Kommunikationskomponente 40. Fig. 3 zeigt eine Übersicht eines Ausführungsbeispiels eines Systems 80 mit Ausführungsbeispielen von Überwachungsinstanzen 30, 60 und Ausführungsbeispielen von Kommunikationskomponenten 40, 50.

Fig. 1 zeigt ein Verfahren 10 für eine Überwachungsinstanz 30 zur Überwachung zumindest einer Kommunikationskomponente 40. Die Kommunikationskomponente 40 ist ausgebildet, um ereignisbasiert über einen Datenbus 70 mit ein oder mehreren anderen Kommunikationskomponenten 50 zu kommunizieren. Das Verfahren 10 umfasst ein regelmäßiges Überprüfen 12 der Funktion der Kommunikationskomponente 40 durch die Überwachungsinstanz 30. Das Verfahren umfasst ferner ein zyklisches Kommunizieren 14 mit zumindest einer anderen Überwachungsinstanz 60, die einer anderen Kommunikationskomponente 50 zugeordnet ist, um die Funktion der Kommunikationskomponente 30, die Funktion der anderen Kommunikationskomponente 50 und die Funktion des Datenbusses 70 zu überwachen.

Hier und im Folgenden sei unter "regelmäßig" ein auf Regeln basierender zeitlicher Ablauf verstanden. So kann eine Regel beispielsweise vorsehen, dass innerhalb eines Zyklus, also innerhalb einer vorgegebenen Zeitspanne, eine solche Kommunikation erfolgt. Ein regelmäßiges Überprüfen kann demnach auf der Grundlage einer definierten zeitlichen Basis, eines Takts oder einer Periode durchgeführt werden, beispielsweise alle 10ms, 20ms, 50ms, 100ms, 200ms, 500ms, 1s, 2s, 5s, etc. Dabei ist den praktischen Verhältnissen angepasst eine gewisse Toleranz zu erwarten und es wird nicht von einer (theoretisch) perfekten Periode auszugehen sein. Insofern kann "regelmäßige" Kommunikation auch "periodische" oder "zyklische" Kommunikation bedeuten, in dem Sinne, dass zwischen zwei Nachrichten eine maximale Zeitspanne nach vorgegebener Wahrscheinlichkeit nicht überschritten wird. Zyklische Kommunikation kann nach einem garantierten oder zumindest hochgradig vorhersehbaren Zeitplan erfolgen.

Eine andere Regel wäre an ein Ereignis geknüpft, sodass jedenfalls mit hoher Sicherheit eine Fehlfunktion innerhalb einer gewissen Zeit erkannt werden kann. In diesem Fall tritt das Ereignis mit ausreichend hoher Wahrscheinlichkeit auf. Schließlich ist auch eine Kombination denkbar, nämlich dass in Abhängigkeit von Ereignissen ein Überprüfungszyklus adaptiert wird. Beispielsweise können manche Kommunikationskomponenten dann häufiger überprüft werden (damit ein Fehler schneller erkannt werden), wenn bestimmte Ereignisse eingetreten sind. So kann beispielsweise ein Frostwarner bei Temperaturen über 20°C relativ selten bis gar nicht überwacht werden, wohingegen bei niedrigen Temperaturen häufiger überprüft wird.

Analog zeigt die Fig. 2 ein Verfahren 20 für eine Kommunikationskomponente 40 zur Kommunikation mit ein oder mehreren anderen Kommunikationskomponenten 50 über einen Datenbus 70. Das Verfahren 20 umfasst ein ereignisbasiertes Kommunizieren 22 mit den ein oder mehreren anderen Kommunikationskomponenten 50 über den Datenbus 70 und ein zyklisches Kommunizieren 24 mit der Überwachungsinstanz 30.

In Ausführungsbeispielen können demnach die Kommunikationskomponenten 40, 50 in einem Kommunikationssystem 80 durch den Kommunikationskomponenten 40, 50 zugeordneten Überwachungsinstanzen 30, 60 erfolgen. Solche Systeme 80 können beispielsweise in Fahrzeugen, z.B. Kraftfahrzeuge, Schiffe, Züge, Flugzeuge, Lastkraftwagen, Personenkraftwagen, Zweirädern, etc. eingesetzt werden. Hierbei kommunizieren beispielsweise Steuergeräte untereinander, die mit verschiedenen Funktionen betraut sind. Zum einen sind zentrale Steuergeräte vorhanden, bei denen Informationen zusammenlaufen und ausgewertet werden, und zum anderen kommen Steuergeräte zum Einsatz, die Komponenten, wie Beleuchtung, Blinker, Bremslicht, Sensoren, Aktoren, Warnlampen, Anzeigen, Eingabegeräte wie Knöpfe oder Hebel, usw. überwachen, steuern oder regeln. Im Folgenden werden diese Steuergeräte auch als Kommunikationskomponenten bezeichnet, die über einen Datenbus 70 miteinander kommunizieren, wie dies in der Fig. 3 gezeigt ist. Fig. 3 zeigt ein System 80 mit zwei Überwachungsinstanzen 30, 60 und zwei Kommunikationskomponenten 40, 50, die über einen Datenbus 70 miteinander kommunizieren. In Ausführungsbeispielen kann der Datenbus 70 beispielsweise der CAN (von engl. Controller Area Network) Bus oder ein anderer Feldbus sein.

Wie die Fig. 3 zeigt, weisen die einzelnen Komponenten 30, 40, 50, 60 jeweils ein oder mehrere Schnittstellen 32, 42, 52, 62 sowie jeweils eine Kontrolleinrichtung 34, 44, 54, 64 auf, die darüber hinaus jeweils miteinander gekoppelt sind. Die ein oder mehreren Schnittstellen 32, 42, 52, 62 können beispielsweise einen oder mehrere Eingänge oder Ausgänge zum Empfangen oder Bereitstellen von Informationen oder Signalen entsprechen, etwa in digitalen Bitwerten, Spannungen, Stromstärken oder elektromagnetischen Wellen, beispielsweise basierend auf einem Code, innerhalb eines Moduls, zwischen Modulen, oder zwischen Modulen verschiedener Entitäten. Insofern eignen sich die ein oder mehreren Schnittstellen 32, 42, 52, 62 um Signale oder Information auf dem Datenbus 70 oder zwischen Überwachungsinstanzen 30, 60 und Kommunikationskomponenten 40, 50 auszutauschen, d.h. zu Senden und/oder zu Empfangen. Dabei können zwischen den ein oder mehreren Schnittstellen 32, 42, 52, 62 noch weitere Komponenten vorhanden oder verschaltet sein, Beispiele sind Verstärker, Filter, Diplexer, Duplexer, Mischer, Phasenschieber, rauscharme Verstärker (auch engl. Low Noise Amplifier (LNA)), Stecker, Buchsen etc.

Die Kontrolleinrichtung 34, 44, 54, 64 kann in Ausführungsbeispielen einem beliebigen Controller oder Prozessor oder einer programmierbaren Hardwarekomponente entsprechen. Beispielsweise kann eine Kontrolleinrichtung 34, 44, 54, 64 auch als Software realisiert sein, die für eine entsprechende Hardwarekomponente programmiert ist. Insofern kann eine Kontrolleinrichtung 34, 44, 54, 64 als programmierbare Hardware mit entsprechend angepasster Software implementiert sein. Dabei können beliebige Prozessoren, wie Digitale Signal Prozessoren (DSPs) zum Einsatz kommen. Ausführungsbeispiele sind dabei nicht auf einen bestimmten Typ von Prozessor eingeschränkt. Es sind beliebige Prozessoren oder auch mehrere Prozessoren oder Mikrokontroller zur Implementierung des Kontrollmoduls denkbar. Es sind auch Implementierungen in integrierter Form mit anderen Kontrolleinheiten denkbar, beispielsweise in einer Kontrolleinheit für ein Fahrzeug, die zusätzlich noch ein oder mehrere anderen Funktionen umfasst. Die hierin beschriebenen Verfahrensschritte können in Ausführungsbeispielen durch die Kontrolleinrichtungen 34, 44, 54, 64 bzw. durch die jeweiligen ein oder mehreren Schnittstellen 32, 42, 52, 62 ausgeführt werden. Insofern sind beschriebene Verfahrensschritte durch die Vorrichtungskomponenten durchführbar.

Die Fig. 3 illustriert ferner mit den doppelseitigen Pfeilen, dass eine entsprechende Kommunikation zwischen den Komponenten oder zwischen Komponenten und Datenbus stattfinden kann.

In Ausführungsbeispielen kann eine erste Kommunikationskomponente 40 beispielsweise ein Steuergerät für einen Bewegungsverwalter/-manager (auch engl. Vehicle Motion Manager VMM) sein. Dieses Steuergerät kann entsprechende Kundenfunktionen (auch engl. "client functions" ) anbieten. Die Kunden, beispielsweise auch andere Steuergeräte als die Kommunikationskomponente 50, die eine entsprechende Schnittstelle zum Fahrzeugführer verwalten, können Anfragen (Requests) stellen, die mehrere Sekunden (z.B. Trajektorie) bis theoretisch Minuten oder gar Stunden (z.B. Soll-Geschwindigkeit) gültig sein können. Wenn aber die Kundenfunktion ausfällt (bzw. die Kommunikation), dann muss zeitnah (kleiner eine Sekunde) eine Ersatzreaktion erfolgen. Diese Funktion übernehmen in diesem Fall die Überwachungsinstanzen 30, 60, die den Kommunikationskomponenten 40, 50 direkt zugeordnet sind und diese lokal überwachen, beispielsweise durch ein zyklisches Kommunizieren zwischen der Überwachungsinstanz 30, 60 und der Kommunikationskomponente 40, 50 über eine sich von dem Datenbus 70 unterscheidende Verbindung.

Die Überwachungsinstanzen 30, 60 untereinander können beispielsweise zyklisch über den Datenbus 70 kommunizieren. Bei einem Ausfall des Datenbusses scheitert diese zyklische Kommunikation und die Fehlfunktion des Datenbusses 70 kann zeitnah erkannt werden. Kommt es zu einer Fehlfunktion einer der Kommunikationskomponenten 40, 50 so kann dies von den Überwachungsinstanzen 30, 60 über die lokalen Schnittstellen festgestellt und über den Datenbus 70 untereinander kommuniziert werden.

In einem weiteren Ausführungsbeispiel werden Warnlampen (Kommunikationskomponente 50) durch eine Kundenfunktion (Kommunikationskomponente 40) ereignisbasiert aktiviert und deaktiviert, wobei die Überwachungsinstanzen 30, 60 gemäß obiger Beschreibung etwaige Fehler zeitnah erkennen. Dies kann eine Reduzierung der Kommunikation auf dem Datenbus bedingen, da die zyklische Kommunikation auf die Überwachungsinstanzen 30, 60 beschränkt werden kann und diese auch mehrere Kommunikationskomponente gleichzeitig überwachen können, ohne den Datenbus 70 dadurch mehr zu belasten. Dies kann zu einer geringeren Nachrichtendichte oder auch Nachrichtengröße auf dem Datenbus 70 führen, als dies der Fall wäre, wenn durch die dazugehörige jeweilige Kundenfunktion eine Warnlampe aktiv unterdrückt (z.B. Bremsen-Warnlampe) wird, was ständige individuelle Nachrichten zwischen den jeweiligen Kommunikationskomponenten erfordert, und die Warnlampe dann aktiviert wird, wenn die Kundenfunktion ausfällt.

Die Fig. 3 zeigt demnach ein Ausführungsbeispiel einer Überwachungsinstanz 30 für zumindest eine Kommunikationskomponente 40, die zur Kommunikation mit ein oder mehreren anderen Kommunikationskomponenten 50 über einen Datenbus 70 ausgebildet ist. Die Überwachungsinstanz 30 umfasst ein oder mehrere Schnittstellen 32 zur Kommunikation über den Datenbus 70 und zur Kommunikation mit der Kommunikationskomponente 40. Die Überwachungsinstanz 30 umfasst eine Kontrolleinrichtung 34, die ausgebildet ist, um die ein oder mehreren Schnittstellen 32 zu kontrollieren, und um mit der Kommunikationskomponente 40 und mit zumindest einer anderen Überwachungsinstanz 60 einer anderen Kommunikationskomponente 50 zyklisch zu kommunizieren.

Wie bereits oben beschrieben, kann die Kontrolleinrichtung 34 der Überwachungsinstanz 30 ausgebildet sein, um mit der Kommunikationskomponente 40 über eine sich von dem Datenbus 70 unterscheidende Verbindung zu kommunizieren, beispielsweise über eine lokale Schnittstelle 32. Darüber hinaus ist die Kontrolleinrichtung 34 ausgebildet, um eine Fehlerindikation an zumindest eine andere Überwachungsinstanz 60 zu übermitteln, wenn eine Fehlfunktion oder ein Kommunikationsfehler der Kommunikationskomponente 40 detektiert wird.

Die Fig. 3 illustriert darüber hinaus ein Ausführungsbeispiel einer Kommunikationskomponente 40 zur Kommunikation mit ein oder mehreren anderen Kommunikationskomponenten 50 über einen Datenbus 70. Die Kommunikationskomponente 40 umfasst ein oder mehrere Schnittstellen 42 zur Kommunikation über den Datenbus 70 und zur Kommunikation mit einer Überwachungsinstanz 30. Die Kommunikationskomponente 40 umfasst ferner eine Kontrolleinrichtung 44, die ausgebildet ist, um die ein oder mehreren Schnittstellen 42 zu kontrollieren, um mit den ein oder mehreren anderen Kommunikationskomponenten 50 ereignisbasiert zu kommunizieren und um mit der Überwachungsinstanz 30 zyklisch zu kommunizieren.

Das Ausführungsbeispiel eines Systems 80 in der Fig. 3, umfasst zumindest zwei Überwachungsinstanzen 30, 60 gemäß obiger Beschreibung und zumindest zwei den Überwachungsinstanzen 30, 60 zugeordnete Kommunikationskomponenten 40, 50 gemäß obiger Beschreibung. Ein weiteres Ausführungsbeispiel ist ein Fahrzeug mit einem solchen System 80.

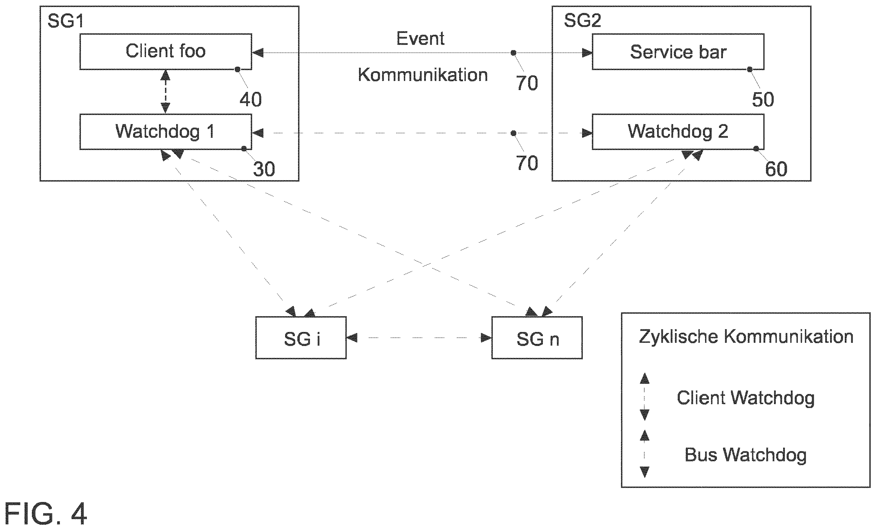

Fig. 4 zeigt eine Architektur eines Überwachungsdienstes in einem Ausführungsbeispiel. Der Überwachungsdienst wird im Folgenden auch Watchdog-Service (Wachhund-Dienst) genannt, analog wird die Überwachungsinstanz 30, 60 auch als Watchdog bezeichnet. Fig. 4 zeigt auf der linken Seite ein erstes Steuergerät "SG 1", auf dem ein Client "foo" als Kommunikationskomponente 40 und ein "Watchdog 1" als Überwachungsinstanz 30 implementiert sind. Auf der rechten Seite ist ein zweites Steuergerät "SG 2" gezeigt, auf dem eine zweite Kommunikationskomponente 50 als (Service) "bar" und eine zweite Überwachungsinstanz 60 als "Watchdog 2" implementiert sind. "foo" und "bar" sind Platzhalter für beliebige "Clients" (Kunden) und Services (Dienste, Kundenfunktionen). Wie die Fig. 4 weiter zeigt, können noch eine Mehrzahl weiterer Steuergeräte vorhanden sein, wobei die Überwachungsinstanzen 30, 60 untereinander über die punktierten Pfeile zyklisch kommunizieren. Die Kommunikation zwischen den Überwachungsinstanzen 30, 60 und den zugeordneten Kommunikationskomponenten 40, 50 findet lokal statt (doppelt gestrichelte Pfeile).

Die Clients (Kommunikationskomponente 40, 50) werden hier zyklisch auf einem lokalen Prozessor auch "localhost" (SG 1, SG2) überwacht, so dass die Buslast keine Rolle spielt. Über die beiden Überwachungsinstanzen 30, 60 wird hier der Überwachungsdienst (Watchdog Service) für die beiden Kommunikationskomponenten 40, 50 implementiert. Auf jedem an der Event-basierten Kommunikation beteiligtem "SG 1, SG 2" wird eine lokale Instanz des Watchdog-Service (Verfahren 10, Überwachungsinstanzen 30, 60) implementiert. Die lokalen Instanzen des Watchdog-Services 30, 60 synchronisieren sich über den Bus 70. Ein "Client", hier eine Kommunikationskomponente 40, 50, kann sich bei dem Watchdog-Service 30, 60 registrieren. Bei einem Kommunikationsfehler informiert der Watchdog-Service 30, 60 als Ersatzreaktion den Kommunikationspartner des "Clients" 40, 50.

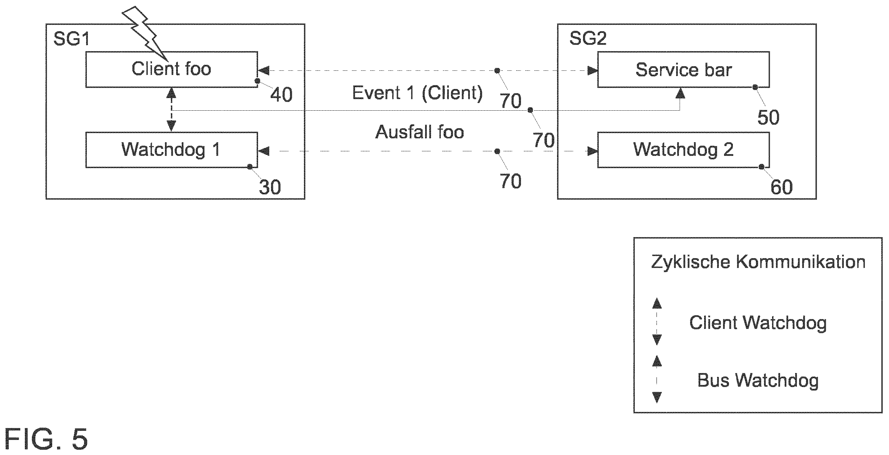

Fig. 5 illustriert einen Ausfall einer Kommunikationskomponente 40 in dem Ausführungsbeispiel, das anhand der Fig. 4 erläutert wurde. Der Client "foo" 40 fällt in diesem Ausführungsbeispiel aus, was durch den Blitz angedeutet ist. Die Überwachungsinstanz 30 "Watchdog 1" bemerkt dies aufgrund der lokalen zyklischen Kommunikation mit dem "Client foo", die beispielsweise ebenfalls ausfallen kann oder über die der "Client foo" einen Fehler an den Watchdog melden kann. "Watchdog 1" 30 kann dann über die zyklische Kommunikation mit dem "Watchdog 2" 60 einen entsprechende Nachricht übermitteln, die dann von dem "Watchdog 2" an den "Service bar" 50 weitergegeben werden kann. Auf diese Art kann der "Watchdog 1" 30 den "Service bar" 50 über den Fehler in Kenntnis setzen.

Das Verfahren 10 für die Überwachungsinstanz 30 umfasst in diesem Ausführungsbeispiel ein Übermitteln einer Fehlerindikation an zumindest die eine andere Überwachungsinstanz 50, wenn eine Fehlfunktion oder ein Kommunikationsfehler der Kommunikationskomponente 40 detektiert wird. In weiteren Ausführungsbeispielen kann auch eine Übermittlung an mehrere weitere Überwachungsinstanzen 60 erfolgen.

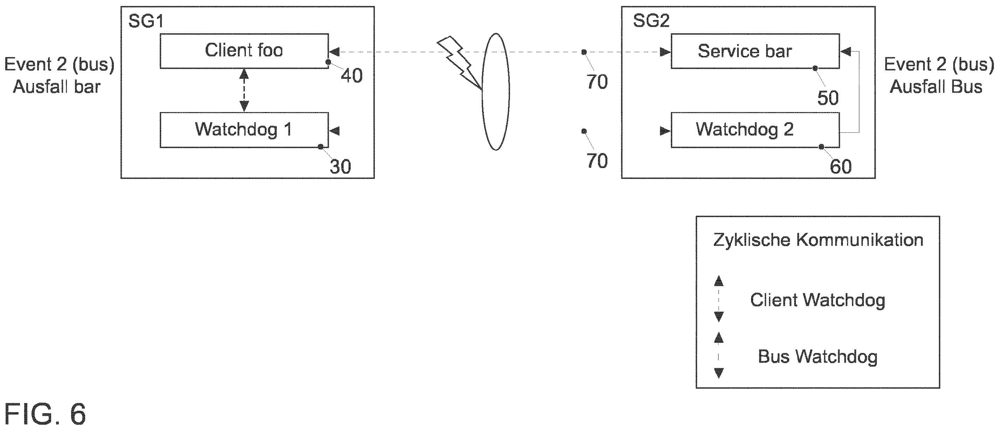

Fig. 6 zeigt einen Ausfall eines Datenbusses 70 in einem Ausführungsbeispiel. Es wird wieder von dem Szenario ausgegangen, das schon anhand der Fign. 4 und 5 erläutert wurde. Der Blitz in Fig. 6 deutet an, dass es zu einer Störung oder einem Ausfall auf dem Datenbus 70 kommt. Damit wird auch die zyklische Kommunikation zwischen den Überwachungsinstanzen 30, 60 unterbrochen, sodass beide Seiten den Fehler bemerken und ihren Kommunikationskomponenten 40, 50 mitteilen können. Die Verzögerung mit der ein solcher Fehler bemerkt und mitgeteilt werden kann, hängt von Frequenz der zyklischen Kommunikation auf dem Datenbus 70 ab. Darüber hinaus kann eine Synchronisation der einzelnen Überwachungsinstanzen 30, 60 dabei helfen, zusätzliche Verzögerungen zu vermeiden. Das Verfahren 10, das in einer Überwachungsinstanz 30, 60 ausgeführt wird, umfasst daher ein Synchronisieren mit zumindest einer anderen Überwachungsinstanz 60 über den Datenbus 70. Wenn die auf dem Datenbus 70 zyklisch aktiven Überwachungsinstanzen 30, 60 untereinander synchronisiert sind, d.h. eine gemeinsame Zeitbasis oder einen Takt haben, kann die Kommunikation auf dem Datenbus 70 effizienter ablaufen, bzw. die Übertragungskapazitäten des Datenbusses besser ausgenutzt werden.

Die Kontrolleinrichtung 34 der Überwachungsinstanz 30 ist entsprechend ausgebildet, um sich über den Datenbus 70 mit zumindest einer anderen Überwachungsinstanz 60 zu synchronisieren, bzw. umgekehrt.

Dies kann auch durch ein effizientes Verwalten der Kapazitäten der Überwachungsinstanz 30, 60 selbst erfolgen. Um dies zu erreichen kann das Verfahren 10 für die Überwachungsinstanz 30, 60 ein Registrieren der Kommunikationskomponente 40, 50 bei der Überwachungsinstanz 30, 60 vorsehen. Das Verfahren 20 für die Kommunikationskomponente 40, 50 kann entsprechend ferner ein Registrieren bei der Überwachungsinstanz 30, 60 vorsehen. Die Kontrolleinrichtung 34, 64 der Überwachungsinstanz 30, 60 kann ausgebildet sein, um eine Registrierung einer Kommunikationskomponente 40, 50 durchzuführen. Die Kontrolleinrichtung 44, 54 der Kommunikationskomponente kann ausgebildet sein, um bei der Überwachungsinstanz 30, 60 eine Registrierung durchzuführen.

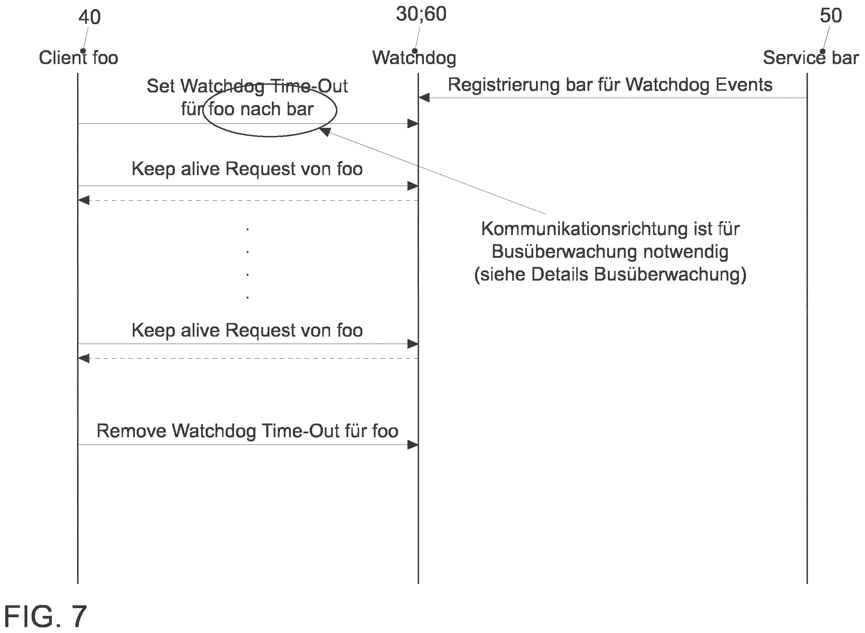

Fig. 7 zeigt eine Sequenz von ausgetauschten Nachrichten in einem Ausführungsbeispiel, wobei die Fig. 7 den Normalablauf des Watchdog-Services zeigt, bei dem keine Fehler vorkommen. Die Fig. 7 zeigt auf der linken Seite den "Client foo" 40 gemäß obiger Beschreibung. In der Mitte ist der Überwachungsdienst "Watchdog" dargestellt, der durch die oben beschriebenen Überwachungsinstanzen 30, 60 implementiert wird. Beide Kommunikationskomponenten 40, 50 registrieren sich für den Watchdog-Service. Der "Client foo" 40 kann in diesem Ausführungsbeispiel einen Benachrichtigungsdienst mit Zeitgrenze (Time-Out) anfragen, wobei die Zeitgrenze diejenige Zeit vorgibt, nach der eine Nachricht über einen Fehler spätestens nach Auftreten des Fehlers verteilt werden soll. Dabei ist die Kommunikationsrichtung für die Busüberwachung zumindest für manche Dienste wichtig oder notwendig, wie im Folgenden noch erläutert werden wird. In dem gezeigten Ausführungsbeispiel wird die zyklische Kommunikation zwischen dem "Client foo" 40 und dem Watchdog-Service 30, 60 so realisiert, dass der "Client foo" in regelmäßigen Zeitabschnitten Anfragen an den Watchdog 30 stellt (auch engl. "keep alive Request", Erhaltungsanfrage), die dann von dem Watchdog 30 beantwortet wird. Wie die Fig. 7 unten zeigt, kann der Dienst auch wieder abbestellt werden (auch engl. "remove").

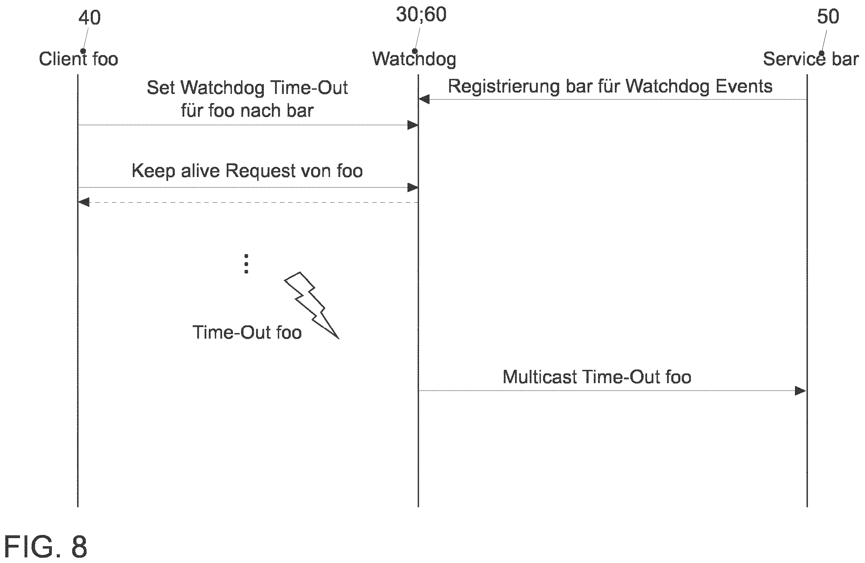

Fig. 8 zeigt eine Sequenz von ausgetauschten Nachrichten in einem weiteren Ausführungsbeispiel. Die Fig. 8 zeigt das Szenario aus Fig. 7 und die ausgetauschten Nachrichten bei dem Fehlerbild nach Fig. 5. Demnach zeigt der Blitz wieder den Fehler bei "Client foo" 40 an. Dieser Fehler tritt in dem anhand der Fig. 7 bereits beschriebenen Szenario auf, wenn der "Client foo" 40 nicht innerhalb der gesetzten Zeitgrenze eine Anfrage beim Watchdog-Service stellt. Der Watchdog-Service 30, 60 verteilt (multicast) daraufhin eine entsprechende Nachricht "Time-Out foo" (Überschreitung der Zeitgrenze durch "foo").

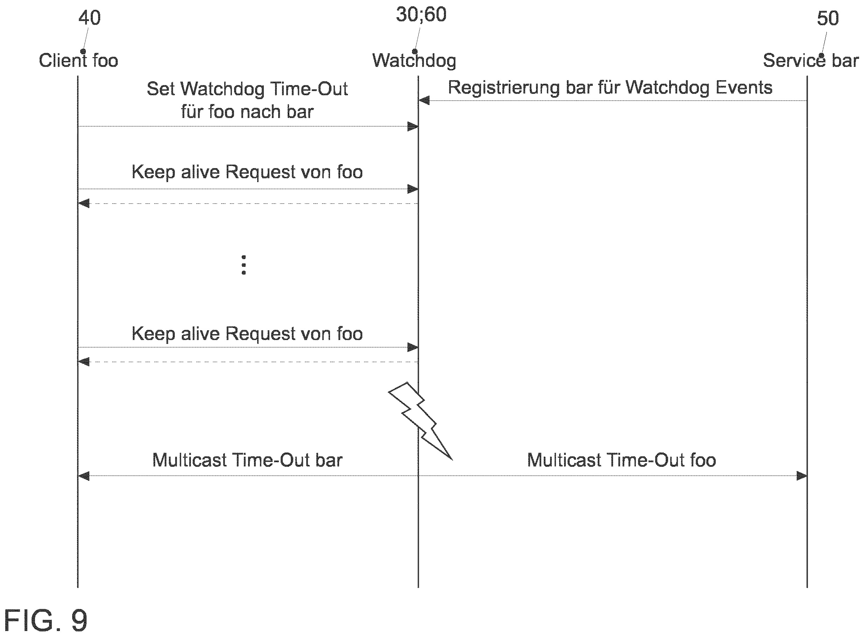

Bei einem Bus-Fehler meldet sich der Watchdog-Service im nachfolgenden Ausführungsbeispiel mit einer Information darüber, welche Kommunikationsverbindungen der registrierten Clients betroffen sind. Mit anderen Worten, hat der Watchdog-Service Kenntnis darüber, welche Kommunikationswege die registrierten Clients mit ihren verwendeten Services haben. Wenn dann ein Bus-Fehler auftritt, kann der Watchdog-Service per Event auf beiden "Seiten" der Unterbrechung mitteilen, welche Kommunikationswege zwischen Clients und Services gestört sind. Fig. 9 zeigt eine Sequenz von ausgetauschten Nachrichten in einem weiteren Ausführungsbeispiel mit einem Datenbusfehler gemäß Fig. 6. Nach Detektion des Fehlers (durch den Blitz angedeutet) verteilt der Watchdog-Service 30, 60 auf den Fehler hin eine entsprechende Nachricht "Time-Out foo" (Überschreitung der Zeitgrenze durch "foo") an "Service bar" 50 und eine Nachricht "Time-Out bar" an "Client foo" 40.

In Ausführungsbeispielen können die hierin offenbarten Verfahren 10, 20 zur Überwachung von Kommunikationskomponenten 40, 50 und einem Datenbus 70 in einem Fahrzeug eingesetzt werden. Entsprechend können die Überwachungsinstanzen 30, 60 zur Überwachung von Kommunikationskomponenten 40, 50 und einem Datenbus 70 in einem Fahrzeug ausgebildet sein. Ausführungsbeispiele können beispielsweise in Personenkraftwagen, Lastkraftwagen, Eisenbahnen, Flugzeuge oder Fahrzeugen allgemein eingesetzt werden. Ausführungsbeispiele können dazu beispielsweise zentrale Services/Dienste zur Überwachung der Kommunikationsbusse auf einer obersten Kommunikationsschicht verwenden.

Weitere Ausführungsbeispiele sind Computerprogramme zur Durchführung eines der hierin beschriebenen Verfahren, wenn das Computerprogramm auf einem Computer, einem Prozessor, oder einer programmierbaren Hardwarekomponente abläuft. Je nach bestimmten Implementierungsanforderungen können Ausführungsbeispiele der Erfindung in Hardware oder in Software implementiert sein. Die Implementierung kann unter Verwendung eines digitalen Speichermediums, beispielsweise einer Floppy-Disk, einer DVD, einer Blu-Ray Disc, einer CD, eines ROM, eines PROM, eines EPROM, eines EEPROM oder eines FLASH-Speichers, einer Festplatte oder eines anderen magnetischen oder optischen Speichers durchgeführt werden, auf dem elektronisch lesbare Steuersignale gespeichert sind, die mit einer programmierbaren Hardwarekomponente derart zusammenwirken können oder zusammenwirken, dass das jeweilige Verfahren durchgeführt wird.

Eine programmierbare Hardwarekomponente kann durch einen Prozessor, einen Computerprozessor (CPU = Central Processing Unit), einen Grafikprozessor (GPU = Graphics Processing Unit), einen Computer, ein Computersystem, einen anwendungsspezifischen integrierten Schaltkreis (ASIC = Application-Specific Integrated Circuit), einen integrierten Schaltkreis (IC = Integrated Circuit), ein Ein-Chip-System (SOC = System on Chip), ein programmierbares Logikelement oder ein feldprogrammierbares Gatterarray mit einem Mikroprozessor (FPGA = Field Programmable Gate Array) gebildet sein.

Das digitale Speichermedium kann daher maschinen- oder computerlesbar sein. Manche Ausführungsbeispiele umfassen also einen Datenträger, der elektronisch lesbare Steuersignale aufweist, die in der Lage sind, mit einem programmierbaren Computersystem oder einer programmierbare Hardwarekomponente derart zusammenzuwirken, dass eines der hierin beschriebenen Verfahren durchgeführt wird. Ein Ausführungsbeispiel ist somit ein Datenträger (oder ein digitales Speichermedium oder ein computerlesbares Medium), auf dem das Programm zum Durchführen eines der hierin beschriebenen Verfahren aufgezeichnet ist.

Allgemein können Ausführungsbeispiele der vorliegenden Erfindung als Programm, Firmware, Computerprogramm oder Computerprogrammprodukt mit einem Programmcode oder als Daten implementiert sein, wobei der Programmcode oder die Daten dahin gehend wirksam ist bzw. sind, eines der Verfahren durchzuführen, wenn das Programm auf einem Prozessor oder einer programmierbaren Hardwarekomponente abläuft. Der Programmcode oder die Daten kann bzw. können beispielsweise auch auf einem maschinenlesbaren Träger oder Datenträger gespeichert sein. Der Programmcode oder die Daten können unter anderem als Quellcode, Maschinencode oder Bytecode sowie als anderer Zwischencode vorliegen.

Die oben beschriebenen Ausführungsbeispiele stellen lediglich eine Veranschaulichung der Prinzipien der vorliegenden Erfindung dar. Es versteht sich, dass Modifikationen und Variationen der hierin beschriebenen Anordnungen und Einzelheiten anderen Fachleuten einleuchten werden. Deshalb ist beabsichtigt, dass die Erfindung lediglich durch den Schutzumfang der nachstehenden Patentansprüche und nicht durch die spezifischen Einzelheiten, die anhand der Beschreibung und der Erläuterung der Ausführungsbeispiele hierin präsentiert wurden, beschränkt sei.

### Bezugszeichenliste

- 10: Verfahren für Überwachungsinstanz
- 12: regelmäßiges Überprüfen
- 14, 24: zyklisches Kommunizieren
- 20: Verfahren für Kommunikationskomponente
- 22: ereignisbasiertes Kommunizieren
- 30, 60: Überwachungsinstanz
- 32, 42, 52, 62: ein oder mehrere Schnittstellen
- 34, 44, 54, 64: Kontrolleinrichtung
- 40, 50: Kommunikationskomponente
- 70: Datenbus
- 80: System

## Patentansprüche

1. Verfahren (10) für eine Überwachungsinstanz (30) zur Überwachung zumindest einer Kommunikationskomponente (40), wobei die Kommunikationskomponente (40) ausgebildet ist, um ereignisbasiert über einen Datenbus (70) mit ein oder mehreren anderen Kommunikationskomponenten (50) zu kommunizieren, mit folgenden Schritten:
regelmäßiges Überprüfen (12) der Funktion der Kommunikationskomponente (40) durch die Überwachungsinstanz (30) über den Datenbus oder eine sich von dem Datenbus unterscheidende Verbindung; und
zyklisches Kommunizieren (14) mit zumindest einer anderen Überwachungsinstanz (60), die einer anderen Kommunikationskomponente (50) zugeordnet ist, um die Funktion der Kommunikationskomponente (40), die Funktion der anderen Kommunikationskomponente (50) und die Funktion des Datenbusses (70) zu überwachen, ferner umfassend Synchronisieren mit der anderen Überwachungsinstanz (60) über den Datenbus (70), um eine gemeinsame Zeitbasis zu erhalten.

2. Verfahren (10) gemäß Anspruch 1, wobei das zyklische Kommunizieren auf dem Datenbus (70) erfolgt.

3. Verfahren (10) gemäß einem der vorangehenden Ansprüche, ferner umfassend ein zyklisches Kommunizieren zwischen der Überwachungsinstanz (30) und der Kommunikationskomponente (40) über eine sich von dem Datenbus (70) unterscheidende Verbindung.

4. Verfahren (10) gemäß einem der vorangehenden Ansprüche, ferner umfassend Übermitteln einer Fehlerindikation an zumindest eine andere Überwachungsinstanz (50), wenn eine Fehlfunktion oder ein Kommunikationsfehler der Kommunikationskomponente (40) detektiert wird.

5. Verfahren (10) gemäß einem der vorangehenden Ansprüche, ferner umfassend Registrieren der Kommunikationskomponente (40) bei der Überwachungsinstanz (30).

6. Verfahren (10) gemäß einem der vorangehenden Ansprüche zur Überwachung von Kommunikationskomponenten (40; 50) und einem Datenbus (70) in einem Fahrzeug.

7. Verfahren (20) für eine Kommunikationskomponente (40) zur Kommunikation mit ein oder mehreren anderen Kommunikationskomponenten (50) über einen Datenbus (70), mit
ereignisbasiertes Kommunizieren mit den ein oder mehreren anderen Kommunikationskomponenten (50) über den Datenbus (70); und
zyklisches Kommunizieren, über eine sich von dem Datenbus unterscheidende Verbindung, mit einer der Kommunikationskomponente (40) zugeordneten Überwachungsinstanz (30).

8. Verfahren (20) gemäß Anspruch 7, ferner umfassend Registrieren bei der Überwachungsinstanz (30).

9. Computerprogramm zur Durchführung eines der Verfahren nach einem der Ansprüche 1 bis 8, wenn das Computerprogramm auf einem Computer, einem Prozessor, oder einer programmierbaren Hardwarekomponente abläuft.

10. Überwachungsinstanz (30) für zumindest eine Kommunikationskomponente (40), die zur Kommunikation mit ein oder mehreren anderen Kommunikationskomponenten (50) über einen Datenbus (70) ausgebildet ist, mit
ein oder mehreren Schnittstellen (32) zur Kommunikation über den Datenbus (70) und zur Kommunikation mit der Kommunikationskomponente (40); und
einer Kontrolleinrichtung (34), die ausgebildet ist, um die ein oder mehreren Schnittstellen (32) zu kontrollieren, und um das Verfahren gemäß einem der Ansprüche 1 bis 6 auszuführen.

11. Kommunikationskomponente (40) zur Kommunikation mit ein oder mehreren anderen Kommunikationskomponenten (50) über einen Datenbus (70), mit
ein oder mehreren Schnittstellen (42) zur Kommunikation über den Datenbus (70) und zur Kommunikation mit einer Überwachungsinstanz (30);
einer Kontrolleinrichtung (44), die ausgebildet ist, um die ein oder mehreren Schnittstellen (42) zu kontrollieren, und um das Verfahren gemäß einem der Ansprüche 7 oder 8 auszuführen.

12. Kommunikationskomponente (40) gemäß Anspruch 11, wobei die Kontrolleinrichtung (44) ausgebildet ist, um bei der Überwachungsinstanz (30) eine Registrierung durchzuführen.

13. System (80) mit zumindest zwei Überwachungsinstanzen (30; 60) gemäß Anspruch 10 und zumindest zwei den Überwachungsinstanzen (30; 60) zugeordneten Kommunikationskomponenten (40; 50) gemäß einem der Ansprüche 11 oder 12.

14. Fahrzeug mit einem System (80) gemäß Anspruch 13.

## Claims

1. Method (10) for a monitoring entity (30) for monitoring at least one communication component (40), wherein the communication component (40) is designed to communicate in an event-based manner via a data bus (70) with one or more other communication components (50), comprising the following steps:
regular checking (12) of the function of the communication component (40) by the monitoring entity (30) via the data bus or a connection which differs from the data bus; and
cyclic communication (14) with at least one other monitoring entity (60) assigned to another communication component (50) in order to monitor the function of the communication component (40), the function of the other communication component (50) and the function of the data bus (70), further comprising
synchronizing with the other monitoring entity (60) via the data bus (70) to obtain a common time base.

2. Method (10) according to claim 1, wherein the cyclic communication takes place on the data bus (70).

3. Method (10) according to either of the preceding claims, further comprising cyclic communication between the monitoring entity (30) and the communication component (40) via a connection which differs from the data bus (70).

4. Method (10) according to any of the preceding claims, further comprising transmitting an error indication to at least one other monitoring entity (50) when a malfunction or a communication error of the communication component (40) is detected.

5. Method (10) according to any of the preceding claims, further comprising registering the communication component (40) with the monitoring entity (30).

6. Method (10) according to any of the preceding claims for monitoring communication components (40; 50) and a data bus (70) in a vehicle.

7. Method (20) for a communication component (40) for communicating with one or more other communication components (50) via a data bus (70), having
event-based communication with the one or more other communication components (50) via the data bus (70); and
cyclic communication, via a connection which differs from the data bus, with a monitoring entity (30) assigned to the communication component (40).

8. Method (20) according to claim 7, further comprising registering with the monitoring entity (30).

9. Computer program for carrying out one of the methods according to any of claims 1 to 8 when the computer program runs on a computer, a processor, or a programmable hardware component.

10. Monitoring entity (30) for at least one communication component (40) which is designed to communicate with one or more other communication components (50) via a data bus (70), having
one or more interfaces (32) for communicating via the data bus (70) and for communicating with the communication component (40); and
a control device (34) designed to control the one or more interfaces (32) and to carry out the method according to any of claims 1 to 6.

11. Communication component (40) for communicating with one or more other communication components (50) via a data bus (70), having
one or more interfaces (42) for communicating via the data bus (70) and for communicating with a monitoring entity (30);
a control device (44) designed to control the one or more interfaces (42) and to carry out the method according to any of claims 7 or 8.

12. Communication component (40) according to claim 11, wherein the control device (44) is designed to carry out a registration with the monitoring entity (30).

13. System (80) having at least two monitoring entities (30; 60) according to claim 10 and at least two communication components (40; 50) assigned to the monitoring entities (30; 60) according to any of claims 11 or 12.

14. Vehicle having a system (80) according to claim 13.

## Revendications

1. Procédé (10) pour une instance de surveillance (30) pour la surveillance d'au moins un composant de communication (40), dans lequel le composant de communication (40) est configuré pour communiquer, sur la base d'évènements, avec un ou plusieurs autres composants de communication (50) par l'intermédiaire d'un bus de données (70), comportant les étapes suivantes :
vérification régulière (12) du fonctionnement du composant de communication (40) par l'instance de surveillance (30) par l'intermédiaire du bus de données ou d'une connexion différente du bus de données ; et
communication cyclique (14) avec au moins une autre instance de surveillance (60) associée à un autre composant de communication (50) afin de surveiller le fonctionnement du composant de communication (40), le fonctionnement de l'autre composant de communication (50) et le fonctionnement du bus de données (70), comprenant en outre
la synchronisation avec l'autre instance de surveillance (60) par l'intermédiaire du bus de données (70) afin d'obtenir une base de temps commune.

2. Procédé (10) selon la revendication 1, dans lequel la communication cyclique est effectuée sur le bus de données (70).

3. Procédé (10) selon l'une des revendications précédentes, comprenant en outre une communication cyclique entre l'instance de surveillance (30) et le composant de communication (40) par l'intermédiaire d'une connexion différente du bus de données (70).

4. Procédé (10) selon l'une des revendications précédentes, comprenant en outre une transmission d'une indication de défaillance à au moins une autre instance de surveillance (50) lorsqu'un fonctionnement défaillant ou une défaillance de communication du composant de communication (40) est détecté.

5. Procédé (10) selon l'une des revendications précédentes, comprenant en outre un enregistrement du composant de communication (40) auprès de l'instance de surveillance (30).

6. Procédé (10) selon l'une des revendications précédentes pour la surveillance de composants de communication (40 ; 50) et d'un bus de données (70) dans un véhicule.

7. Procédé (20) pour un composant de communication (40) pour la communication avec un ou plusieurs autres composants de communication (50) par l'intermédiaire d'un bus de données (70), comportant
la communication sur la base d'évènements avec le ou les autres composants de communication (50) par l'intermédiaire du bus de données (70) ; et
la communication cyclique, par l'intermédiaire d'une connexion différente du bus de données, avec une instance de surveillance (30) associée au composant de communication (40).

8. Procédé (20) selon la revendication 7, comprenant en outre un enregistrement auprès de l'instance de surveillance (30).

9. Programme informatique pour la mise en œuvre d'un des procédés selon l'une des revendications 1 à 8 lorsque le programme informatique est exécuté sur un ordinateur, un processeur ou un composant matériel programmable.

10. Instance de surveillance (30) pour au moins un composant de communication (40) configuré pour communiquer avec un ou plusieurs autres composants de communication (50) par l'intermédiaire d'un bus de données (70), comportant
une ou plusieurs interfaces (32) pour la communication par l'intermédiaire du bus de données (70) et pour la communication avec le composant de communication (40) ; et
un dispositif de contrôle (34) configuré pour contrôler la ou les interfaces (32) et pour mettre en œuvre le procédé selon l'une des revendications 1 à 6.

11. Composant de communication (40) pour la communication avec un ou plusieurs autres composants de communication (50) par l'intermédiaire d'un bus de données (70), comportant
une ou plusieurs interfaces (42) pour la communication par l'intermédiaire du bus de données (70) et pour la communication avec une instance de surveillance (30) ;
un dispositif de contrôle (44) configuré pour contrôler la ou les interfaces (42), et pour mettre en œuvre le procédé selon l'une des revendications 7 ou 8.

12. Composant de communication (40) selon la revendication 11, dans lequel le dispositif de contrôle (44) est configuré pour mettre en œuvre un enregistrement auprès de l'instance de surveillance (30).

13. Système (80) comportant au moins deux instances de surveillance (30 ; 60) selon la revendication 10 et au moins deux composants de communication (40 ; 50) selon l'une des revendications 11 ou 12 associés aux instances de surveillance (30 ; 60).

14. Véhicule comportant un système (80) selon la revendication 13.
